Europäisches Patentamt

European Patent Office

Office européen des brevets

(11) Publication number: **0 048 512**
**B1**

(12) EUROPEAN PATENT SPECIFICATION

(45) Date of publication of patent specification: 25.07.84    (51) Int. Cl.³: **C 08 F 255/02**

(21) Application number: 81201003.1

(22) Date of filing: 10.09.81

(54) Process for the preparation of a graft copolymer.

(30) Priority: 19.09.80 NL 8005229

(43) Date of publication of application:
31.03.82 Bulletin 82/13

(45) Publication of the grant of the patent:
25.07.84 Bulletin 84/30

(84) Designated Contracting States:
AT BE CH DE FR GB IT LI NL SE

(56) References cited:
DE - A - 1 420 148
FR - A - 2 134 910
GB - A - 1 509 636
US - A - 3 914 339
US - A - 3 934 056

CHEMICAL ABSTRACTS, vol. 91, no. 24, 1979,
page 31, abstract 194096h, COLUMBUS, OHIO
(US)

(73) Proprietor: STAMICARBON B.V.
Postbus 10
NL-6160 MC Geleen (NL)

(72) Inventor: van der Loos, Jozef Lambertus Maria
Rijksweg Zuid 146
NL-6134 AE Sittard (NL)
Inventor: Bongers, Jozef Johannes Maria
Past. Tissenstraat 6
NL-6181 HV Elsloo (L) (NL)

(74) Representative: Hatzmann, Marinus Jan et al,
OCTROOIBUREAU DSM P.O.Box 9
NL-6160 MA Geleen (NL)

## Description

The invention relates to a process for the preparation of a graft polymer at least partly by bulk — or solution — polymerizing one or more monomers in the presence of a solution of a saturated rubber.

Such a process is described in the US—A—3,885,233. The process according to this specification has been developed for the purpose of improving the grafting degree of the monomers on the saturated rubber. To this end special initiators are applied. This process can be carried out with the otherwise usual polymerization techniques.

It has been found that in applying this process and other analogous processes the problem arises that, during the polymerization, at least if carried out in mass or in solution, the viscosity of the polymerization mixture will show a strong increase.

This will result, on the one hand, in a substantial increase in the consumption of energy on account of the extra energy required for stirring, while, on the other hand, the properties of the polymer formed may deteriorate by a decrease in homogeneousness during the polymerization.

Moreover, it may limit the maximum applicable rubber content.

The purpose of the invention, therefore, is to provide a process as described in the preamble, for the preparation of graft copolymers, in which process these problems do not occur.

The process according to the invention is characterized in additionally to said saturated rubber an ethylenevinylacetate copolymer is present in solution during the polymerization.

Surprisingly, it has been found that in applying such a process, in which the solution of the rubber, moreover, contains an ethylene-vinylacetate copolymer (EVA), the increase in the viscosity of the polymerization mixture is substantially smaller than in applying just the rubber.

The copolymer of ethylene and vinylacetate may have been prepared in the usual manner by high pressure (500—5000 bar) or by suspension polymerization. The vinylacetate content may range from 5 to 80% by weight. An optimum process, that is an optimum influencing of the viscosity of the polymerization mixture as well as optimum mechanical properties of the product, is obtained with vinylacetate incorporation percentages ranging from 5 to 55% by weight.

The process according to the invention can be applied to graft polymerization in mass, i.e. the rubber and the EVA are dissolved in one or more of the monomers, or in solution. In the latter case an inert solvent or mixture of solvents is present in which the rubber including the EVA and the monomers are dissolved.

As solvents all solvents applicable in solution polymerization, such as aromatic, cycloaliphatic and aliphatic hydrocarbons and mixtures thereof, are in principle suitable. Preferably a mixture of aliphatic hydrocarbons, or of one or more aliphatic and one or more aromatic hydrocarbons, is used.

In addition the process according to the invention can be applied also in mass-suspension-, solution-suspension-, emulsion-mass polymerization, or in another polymerization technique in which polymerization is at least partly effected in mass or in solution. This means that the invention can also be applied in the so-called precipitation polymerization, in which process polymerization is effected in a polymerization mixture until the solubility of the product formed has been exceeded.

The monomers applicable in the process according to the invention comprise all ethylenically unsaturated monomers.

In a preferred embodiment one or more monomers are chosen from the group of
—styrene and/or derivatives of styrene, such as halogenated styrene and $\alpha$-methylstyrene;
—acrylonitrile and/or methacrylonitrile;
—acrylate and/or methacrylate;
—maleic anhydride;
—N-substituted maleimides.

As rubber in principle all soluble, saturated rubbers can be used. These rubbers do not contain a considerable quantity of unsaturation in the main chain. The amount of unsaturation is less than 10 unsaturated bonds per 1000 carbon-carbon-bonds in the main chain.

Preferably there are less than 2.5 unsaturated bonds per 1000 C—C-bonds.

Preferred examples of these rubbers are butyl-rubber, acrylate rubber, chloroprene, ethylene-propylene-rubber (EP) and ethylene-propylene-diene-rubber.

As diene one or more multiply unsaturated compounds can be used such as the non-conjugated dienes. Examples thereof are dicyclopentadiene (DCPD), hexadiene (HP) and ethylidene norbornene (EN).

The polymerization can take place in the presence of the auxiliary materials normally used for radical polymerizations, such as compounds producing free radicals, chain length regulators, redox compounds and the like.

The polymerization may be continuous, batchwise or semi-continuous.

After completion of the polymerization the excess of monomer (mass polymerization) and/or solvent (solution polymerzation) must be removed. This can be done by evaporation in the manner usual for these polymerization techniques.

The polymerization is preferably effected in such a manner that the combined rubber/EVA content of the graft copolymer obtained is 5—40% by weight on average, preferably 10—20% by weight. This has the advantage that the product of the process has a good impact resistance while retaining good processability.

The quantity of copolymers of ethylene and vinylacetate preferably amounts to 5—85% by weight in respect of the total quantity of rubber and ethylene-vinylacetate copolymer jointly, more in particular 5 to 40% by weight.

The product obtained by applying the process, according to the invention can be mixed in the usual manner with additives, such as stabilizers, fillers, pigments, lubricants, and antistatics. In addition, the product can be mixed with one or more other polymers, such as styrene-acrylonitrile- or $\alpha$-methylstyrene-acrylonitrile copolymers.

The main application of these products lies in the field of objects having good weather-resistant characteristics. Consequently it will usually be necessary to incorporate an amount of UV-stabilizers in the product. A suitable process for UV-stabilization is given in the GB—A—1,582,280.

The invention is also directed to a weather resistant polymer composition comprising

10—100 parts by weight of a graft polymer obtained by bulk- or solution-polymerizing one or more monomers in the presence of a solution of a saturated rubber,

0—90 parts by weight of a rigid copolymer, and

0—5 parts by weight of one or more UV-stabilizers.

According to the invention this composition is characterized in that as saturated rubber a mixture of two saturated polymers is used, one of which polymers is an ethylene-vinylacetate copolymer, which is present in solution during polymerization.

Preferably said ethylene-vinylacetate copolymer constitutes between 5 and 40% by weight of said mixture.

Surprisingly it has been found that this product has a greatly improved flexural modulus as well as an improved impact strength.

The rigid copolymer is by preference a rigid styrene and/or $\alpha$-methylstyrene-acrylonitrile copolymer.

Examples I—III and Comparative Example A

500 ml of a solution, in heptane, of the polymers mentioned in the tables was fed, in a nitrogen atmosphere, to a three-necked flask provided with stirrer, reflux cooler and thermometer. This solution contained 50 g polymer per litre heptane. During stirring the monomers of styrene and acrylonitrile, in a weight ratio of 70/30 and initiator, bis(4-tert.butyl-cyclohexyl)peroxydicarbonate, were added, upon which the temperature was raised to the desired value so that the polymerization started.

During the polymerization the temperature was kept at a constant value of 55°C.

The polymerization was discontinued by pouring the polymer mixture out into methanol so that the polymer was precipitated. After having been washed and dried, the product of grafting was mixed with such a quantity of copolymer of styrene and acrylonitrile prepared separately that the rubber content was 20% by weight.

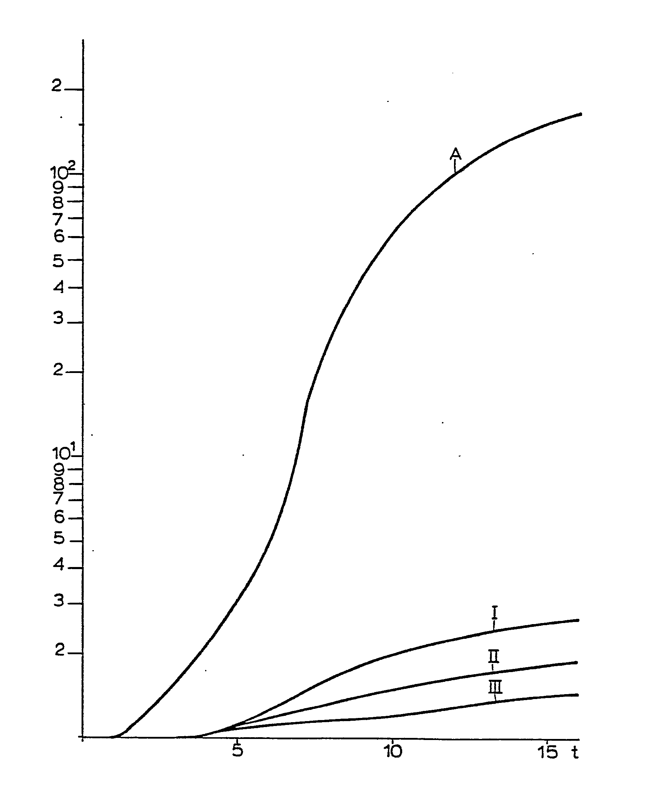

During the polymerization the viscosity variation of the polymer mixture was determined. This viscosity is given in the figure in which the horizontal mixture was determined. This viscosity is given in the figure in which the horizontal axis shows the time expressed in hours and the vertical axis, with a logarithmic scale, the (standardized) viscosity of the polymer mixture. This viscosity has been calculated by dividing the viscosity at a certain moment by the viscosity at the beginning of the polymerization.

The figure clearly shows that, in applying the process according to the invention, the increase in viscosity is substantially smaller so that, during the polymerization, there may be a good mixture and discharge of heat.

Moreover, these experiments clearly show that, in applying the process according to the invention, the viscosity variation is such that the rubber content will no longer raise any problems. In applying the process according to the state of the art only relatively low rubber percentages can be applied on plant scale, because problems will arise already at a viscosity ratio of about 20.

3

TABLE

| Polymers | | | | |
|---|---|---|---|---|
| | EPT [4]<br>% [1] | EVA [5]<br>% [1] | Impact resistance [2]<br>kJ /m² | Flexural modulus [3]<br>N /mm² |
| A | 100 | — | 32 | 15,000 |
| I | 75 | 25 | 46 | 24,800 |
| II | 50 | 50 | 19 | 25,900 |
| III | 25 | 75 | 7 | 26,200 |

1) The percentages relate to the total quantity of EPT + EVA
2) ASTM D 256 (20°C)
3) ASTM D 790 (20°C)
4) Ethylene-propylene-DCPD—EN with 1—2% by weight DCPD and 7—9% by
weight EN (ethylene content 38—48% by weight)
5) Ethylene-vinylacetate copolymer with 28% by weight vinylacetate.

**Claims**

1. Process for the preparation of a graft polymer at least partly by bulk- or solution-polymerizing one or more monomers in the presence of a solution of a saturated rubber, characterized in that additionally to said saturated rubber, an ethylene-vinylacetate copolymer is present in solution during the polymerization.

2. Process according to claim 1, characterized in that the said one or more monomers are chosen from the groups of
—styrene and/or derivatives of styrene,
—acrylonitrile and/or methacrylonitrile,
—acrylate and/or methacrylate
—maleic anhydride
—N-substituted maleimides.

3. Process according to claim 1, characterized in that said saturated rubber is chosen from the group of ethylene-propylene rubber, ethylene-propylene-diene rubber, butyl rubber and acrylate rubber.

4. Process according to claim 1—3, characterized in that the rubber is dissolved in one or more of the monomers applied.

5. Process according to claim 1—3, characterized in that the rubber is dissolved in a solvent inert under the polymerization conditions.

6. Process according to claim 5, characterized in that, as solvent, an aliphatic hydrocarbon, a mixture of aliphatic hydrocarbons or a mixture of one or more aliphatic and one or more aromatic hydrocarbons, is used.

7. Process according to any one or more of the claims 1—6, characterized in that the quantity of rubber-EVA present during the polymerization is such that the graft copolymer obtained contains 5—40% by weight of rubber-EVA.

8. Process according to any one or more of the claims 1—7, characterized in that the ethylene-vinylacetate copolymer contains 5—55% by weight of vinylacetate.

9. Polymer obtained while applying any one or more of the claims 1—8.

10. Object wholly or partly made from the polymer according to claim 9.

11. Weather resistant polymer composition comprising
10—100 parts by weight of a graft copolymer obtained by bulk- or solution-polymerizing one or more monomers in the presence of a solution of a saturated rubber and
0—90 parts by weight of a rigid copolymer, and
0—5 parts by weight of one or more UV-stabilizers, characterized in that as saturated rubber a mixture of two saturated polymers is used, one of which is an ethylene-vinylacetate copolymer, which is present in solution during polymerization.

12. Polymer composition according to claim 11, characterized in that said ethylene-vinylacetate copolymer constitutes not more than 40 wt.-% of said mixture.

4

**Revendications**

1. Procédé de préparation d'un polymère greffé du moins partiellement par la polymérisation en masse ou en solution d'un ou de plusieurs monomères, en présence d'une solution d'un caoutchouc saturé, caractérisé en ce que — outre ledit caoutchouc saturé — un copolymère d'éthylène-acétate de vinyle est présent sous forme de solution pendant la polymérisation.

2. Procédé selon la revendication 1, caractérisé en ce qu'un ou plusieurs monomères sont choisis parmi les groupes suivants:
—styrène et/ou dérivés de styrène;
—acrylonitrile et/ou méthacrylonitrile;
—acrylate et/ou méthacrylate;
—anhydride maléique;
—maléimides N-substituées.

3. Procédé selon la revendication 1, caractérisé en ce que ledit caoutchouc saturé est choisi dans le groupe constitué de caoutchouc d'éthylène-propylène, caoutchouc éthylène-propylène-diéne, caoutchouc de butyle et caoutchouc d'acrylate.

4. Procédé selon l'une des revendications 1 à 3, caractérisé en ce que le caoutchouc est dissous dans un ou plusieurs des monomères appliqués.

5. Procédé selon l'une des revendications 1 à 3, caractérisé en ce que le caoutchouc est dissous dans un solvant inerte dans les conditions de polymérisation.

6. Procédé selon la revendication 5, caractérisé en ce qu'on utilise, comme solvant, un hydrocarbure aliphatique, un mélange d'hydrocarbures aliphatiques ou un mélange d'un ou de plusieurs hydrocarbures aliphatiques et un ou plusieurs hydrocarbures aromatiques.

7. Procédé selon l'une des revendications 1 à 6, caractérisé en ce que la quantité de caoutchouc EAV, qui est présente pendant la polymérisation, est telle que le copolymère greffé obtenu contienne 5—40% en poids de caoutchouc EAV.

8. Procédé selon l'une des revendications 1 à 7, caractérisé en ce que le copolymère d'éthylène-acétate de vinyle contient 5—55% en poids d'acétate de vinyle.

9. Polymère obtenu par la mise en oeuvre du procédé selon l'une ou l'autre des revendications 1 à 8.

10. Objet fabriqué entièrement ou partiellement à partir du polymère selon la revendication 9.

11. Composition de polymère résistant au intempéries et contenant 10—100 parties en poids d'un copolymère greffé obtenu par la polymérisation en masse et en solution d'un ou de plusieurs monomères en présence d'une solution d'un caoutchouc saturé, 0—90 parties en poids d'un copolymère rigide, et 0—5 parties en poids d'un ou de plusieurs stabilisants UV, caractérisée en ce qu'on utilise, comme caoutchouc saturé, un mélange de deux polymères saturés dont un est un copolymère d'éthylène-acétate de vinyle qui est présent sous forme de solution pendant la polymérisation.

12. Composition de polymère selon la revendication 11, caractérisée en ce que ledit copolymère d'éthylène-acétate de vinyle ne constitue pas plus de 40% en poids dudit mélange.

**Patentansprüche**

1. Verfahren zur Herstellung eines Pfropfcopolymers, mindestens teilweise durch Massen- oder Lösungspolymerisation eines oder mehrerer Monomere in Gegenwart einer Lösung eines gesättigten Kautschuks, dadurch gekennzeichnet, dass zusätzlich zu dem genannten gesättigten Kautschuk ein Ethylenvinylacetat-Copolymer in Lösung während der Polymerisation anwesend ist.

2. Verfahren nach Anspruch 1, dadurch gekennzeichnet, dass das genannte Monomer bzw. die genannten Monomere aus den folgenden Gruppen ausgewählt werden:
—Styrol und/oder Styrolderivate,
—Acrylnitril und/oder Methacrylnitril,
—Acrylat und/oder Methacrylat,
—Maleinsäureanhydrid,
—N-substituierte Maleïmide.

3. Verfahren nach Anspruch 1, dadurch gekennzeichnet, dass der genannte gesättigte Kautschuk aus der Gruppe Ethylenpropylenkautschuk, Ethylenpropylendienkautschuk, Butylkautschuk und Acrylatkautschuk ausgewählt wird.

4. Verfahren nach Anspruch 1—3, dadurch gekennzeichnet, dass der Kautschuk in einem oder mehreren der verwendeten Monomere gelöst wird.

5. Verfahren nach den Ansprüchen 1—3, dadurch gekennzeichnet, dass der Kautschuk in einem Lösungsmittel gelöst wird, welches unter den Polymerisationsbedingungen inert ist.

6. Verfahren nach Anspruch 5, dadurch gekennzeichnet, dass als Lösungsmittel ein aliphatischer Kohlenwasserstoff, ein Gemisch aliphatischer Kohlenwasserstoffe oder ein Gemisch eines oder mehrerer aliphatischer und eines oder mehrerer aromatischer Kohlenwasserstoffe verwendet wird.

7. Verfahren nach einem oder mehreren der Ansprüche 1—6, dadurch gekennzeichnet, dass die Menge Kautschuk-Ethylenvinylacetat, die während der Polymerisation anwesend ist, derart ist, dass das erhaltene Pfropfcopolymer 5—40 Gew.-% Kautschuk-Ethylenvinylacetat enthält.

8. Verfahren nach einem oder mehreren der Ansprüche 1—7, dadurch gekennzeichnet, dass das Ethylenvinylacetat-Copolymer 5—55 Gew.-% Vinylacetat enthält.

9. Polymer, erhalten durch Anwendung eines oder mehreren der Ansprüche 1—8.

10. Gegenstand, ganz oder teilweise aus dem Polymer gemäss Anspruch 9 hergestellt.

11. Wetterbeständige Polymer-Zusammensetzung mit folgenden Bestandteilen:

10—100 Gewichtsteile eines Pfropfcopolymers, erhalten durch Massen- oder Lösungspolymerisation eines oder mehrerer Monomere in Gegenwart einer Lösung eines gesättigten Kautschuks und

0—90 Gewichtsteile eines steifen Copolymers und

0—5 Gewichtsteile eines oder mehrerer UV-Stabilisatoren, dadurch gekennzeichnet, dass als gesättigter Kautschuk eine Mischung von zwei gesättigten Polymeren verwendet wird, von denen eine ein Ethylenvinylacetat-Copolymer ist, welches während der Polymerisation in Lösung anwesend ist.

12. Polymer-Zusammensetzung nach Anspruch 11, dadurch gekennzeichnet, dass das genannte Ethylenvinylacetat-Copolymer nicht mehr als 40 Gew.-% der genannten Mischung bildet.